# EUROPÄISCHE PATENTSCHRIFT

(11) **EP 1 315 906 B1**
(45) Veröffentlichungstag und Bekanntmachung des Hinweises auf die Patenterteilung: **02.11.2011**
(21) Anmeldenummer: 01965149.6
(22) Anmeldetag: 30.07.2001
(51) Int. Cl.: F04B 39/00, F04B 25/00, F04B 27/02, F16F 15/26, F04B 39/14

(54) **KOLBENKOMPRESSOR MIT DYNAMISCH MASSENAUSGEGLICHENER KURBELWELLE, INSBESONDERE FÜR SCHIENENFAHRZEUGE (LÖSBARE AUSGLEICHSMASSE)**
PISTON COMPRESSOR COMPRISING A CRANKSHAFT WHOSE MASS IS DYNAMICALLY COMPENSATED, IN PARTICULAR FOR RAIL VEHICLES (DETACHABLE COMPENSATORY MASS)
COMPRESSEUR A PISTON COMPRENANT UN VILEBREQUIN A EQUILIBRAGE DYNAMIQUE DES MASSES, NOTAMMENT DESTINE AUX VEHICULES SUR RAILS (MASSE D'EQUILIBRAGE AMOVIBLE)

(30) Priorität: 28.08.2000 DE 10042216
(43) Veröffentlichungstag der Anmeldung: 04.06.2003
(73) Patentinhaber: KNORR-BREMSE Systeme für Schienenfahrzeuge GmbH, 80809 München (DE)
(72) Erfinder: HARTL, Michael, 82008 Unterhaching (DE)
(86) Internationale Anmeldenummer: PCT/EP2001/008792
(87) Internationale Veröffentlichungsnummer: WO 2002/018787

(56) Entgegenhaltungen:
- CH-A- 336 644
- FR-A- 1 239 385
- US-A- 1 259 086
- US-A- 3 358 914
- US-A- 4 494 286
- US-A- 5 199 318

## Beschreibung

Die Erfindung betrifft einen Kolbenkompressor mit dynamisch massenausgeglichener ungeteilter Kurbelwelle, insbesondere für Schienenfahrzeuge, der im wesentlichen aus einer eine Drehbewegung erzeugenden Antriebseinheit und einer nachgeschalteten Verdichtereinheit besteht, welche im wesentlichen aus mehreren an einem Gehäuse für die Kurbelwelle angeordneten topfartigen Zylindern mit zugeordneten Kolben besteht, wobei die über die Antriebseinheit angetriebene und mindestens zwei Kröpfungen aufweisende Kurbelwelle ihre Drehbewegung über je ein zumindest kurbelwellenseitig wälzgelagertes Pleuel in eine lineare Bewegung für den zugeordneten Kolben zum Komprimieren von Luft umwandelt.

Ein solcher Kolbenkompressor ist beispielsweise aus der CH-A-336 644 bekannt.

Im Bereich des Schienenfahrzeugbaus kommen üblicherweise ölgeschmierte Kolben- oder Schraubenkompressoren zum Einsatz. Die Ölschmierung der Verdichtereinheit derartiger Kompressoren hat zur Folge, dass die erzeugte Druckluft ölhaltig ist. Das Kondensat, welches bei der anschließenden Lufttrocknung anfällt, muss - wegen des Ölgehaltes - aus Umweltschutzgründen in beheizbaren Behältern gesammelt und in regelmäßigen Zeitabständen abgelassen und entsorgt werden. Dies führt zu einem erhöhten Wartungsaufwand und zu Entsorgungskosten. Hinzu kommen häufig auftretende Probleme mit einer Emulsionsbildung im Ölkreislauf herkömmlicher ölgeschmierter Verdichtereinheiten im Winterbetrieb bei niedriger Einschaltdauer.

Als Kolbenkompressor kommen in verschiedenen Industriebereichen vermehrt trockenlaufende Kolbenkompressoren zum Einsatz, die daher ebenfalls allgemein bekannt sind. Ein trockenlaufender Kolbenkompressor erarbeitet in seiner Verdichtereinheit ohne ein im Gehäuse befindliches Schmieröl. Stattdessen wird die Schmierung an der Kolbenlaufbahn durch eine besonders reibungsarme dynamische Dichtungsanordnung ersetzt. Alle drehenden Bauteile sind üblicherweise wälzgelagert. die gekapselten Wälzlager werden dabei mit einer temperaturbeständigen, langlebigen Fettfüllung versehen. Im Ventilbereich werden gleitgeführte Bauteile weitestgehend vermieden. Durch die Summe dieser Maßnahmen ist eine Ölschmierung in der Verdichtereinheit entbehrlich. Folglich kann beispielsweise auch die Gefahr einer Verölung der von der Verdichtereinheit erzeugten Druckluft ausgeschlossen werden, was insbesondere im Schienenfahrzeugbau vorteilhaft ist.

Die vorliegende, eine dynamisch massenausgeglichene Kurbelwelle für einen Kolbenkompressor beinhaltende Erfindung ist sowohl bei einem ölgeschmierten Kolbenkompressor als auch insbesondere bei einem trockenlaufenden Kolbenkompressor anwendbar. Der gattungsgemäße Kolbenkompressor verfügt über mehrere Zylinder, wie dies beispielsweise bei einem allgemein bekannten Kolbenkompressor in 3-Zylinder-Bauweise mit Niederdruck- und Hochdruckstufe der Fall ist. Insbesondere bei dieser unsymmetrischen Bauart ist der überzählige Kurbeltrieb - d. h. der Kurbeltrieb, dem kein weiterer Kurbeltrieb zum dynamischen Massenausgleich gegenüberliegt, durch zusätzliche Ausgleichsmassen in dynamischer Hinsicht zu kompensieren.

Weiterhin ist es allgemein bekannt, zusätzliche Ausgleichsmassen an geeigneten Stellen auf der Kurbelwelle selbst anzuordnen. In der Praxis erfolgt dies im Bereich der Enden der Kröpfungen, welche im Scheitelbereich einen Sitz für das Wälzlager eines Pleuels bilden. In diesem Bereich sind Ausgleichsmassen einstückig mit der Kurbelwelle ausgebildet, d. h. angeschmiedet oder angegossen. Um bei dieser Kurbelwelle eine Montage der Wälzlager für die Pleuel zu ermöglichen, ist die bekannte Kurbelwelle geteilt und insoweit mehrteilig ausgeführt. Die Teilung der Kurbelwelle erfolgt dabei im Bereich der Sitze für die Wälzlager, so dass diese über ihren Innenring auf die Sitze aufschiebbar sind. Anschließend werden die Teile der Kurbelwelle zusammengefügt und in das Gehäuse der Verdichtereinheit montiert. Eine geteilt ausgeführte Kurbelwelle erfordert einen erhöhten Herstellungs- und Montageaufwand. Eine andere bekannte Möglichkeit einer Montage der Wälzlager auf der Kurbelwelle besteht darin, Wälzlager mit geteilten Lagerschalen zu verwenden.

Es ist die Aufgabe der vorliegenden Erfindung, eine dynamisch massenausgeglichene ungeteilte Kurbelwelle für einen gattungsgemäßen Kolbenkompressor zu schaffen, die auf einfache Weise eine Montage- und Demontage der Wälzlager auf die zugeordneten Sitze der Kurbelwelle gestattet.

Die Aufgabe wird erfindungsgemäß durch die Merkmale des Anspruchs 1 gelöst. Die nachfolgenden abhängigen Ansprüche geben vorteilhafte Weiterbildungen der Erfindung wieder.

Die Erfindung schließt die technische Lehre ein, dass jedes zwischen dem Pleuel und der Kurbelwelle angeordnete Wälzlager ungeteilte Lagerschalen aufweist, und dass zwischen den für die Pleuel vorgesehenen Kröpfungen der Kurbelwelle mindestens eine unlösbar mit der Kurbelwelle verbundene Ausgleichsmasse vorgesehen ist, wobei die zwischen den Sitzen für die Wälzlager auf der Kurbelwelle und dem benachbarten Kurbelwellenende vorgesehenen Ausgleichsmassen lösbar mit der Kurbelwelle verbunden sind, um ein Auffädeln der Wälzlager vom Kurbelwellenende her auf den zugeordneten Sitz der Kurbelwelle zu ermöglichen, wobei ferner die lösbare Verbindung der Ausgleichsmassen durch Einschrauben der mit einem Gewindeabschnitt versehenen Ausgleichsmassen oder mittels separater Schrauben hergestellt ist.

Die erfindungsgemäße Lösung hat den Vorteil, dass die verwendete Kurbelwelle einteilig gefertigt werden kann und eine aufwendige Montage von Wälzlagern für die Pleuel und ein damit verbundenes Zusammenfügen von Kurbelwellenteilen bei der Vormontage entfällt. Die Kurbelwelle ist geometrisch derart auf den Innenringdurchmesser der ungeteilten Wälzlager für die Pleuel abgestimmt, dass ein einfaches Auffädeln dieser Wälzlager vom Kurbelwellenende her erfolgen kann. Um den dynamischen Massenausgleich für die Kurbelwellen herzustellen, ist anschließend lediglich die lösbare Ausgleichsmasse anzubringen.

Vorzugsweise erfolgt die lösbare Befestigung der Ausgleichsmassen mittels separater Schrauben, die über eine Durchgangsbohrung durch die jeweilige Ausgleichsmasse in die Kurbelwelle einschraubbar sind. Gegebenenfalls ist die Schraubverbindung gegen ein selbsttätiges Lösen zu sichern. Ferner ist es auch denkbar, die lösbare Ausgleichsmasse durch Aufklemmen oder dergleichen an der Kurbelwelle zu befestigen.

Die an einer Kurbelwelle anzuordnenden lösbaren Ausgleichsmassen weisen in vorteilhafter Weise die gleiche geometrische Gestalt auf, so dass diese untereinander austauschbar sind und eine Fertigung in besonders einfacher Weise erfolgen kann.

Im Bereich zwischen den Kröpfungen der Kurbelwelle ist erfindungsgemäß mindestens eine weitere Ausgleichsmasse vorgesehen, die jedoch unlösbar mit der Kurbelwelle verbunden ist. Diese unlösbare Ausgleichsmasse kann an die Kurbelwelle beispielsweise angeformt oder angeschweißt sein. In dem hier angegebenen Bereich zwischen den Kröpfungen der Kurbelwelle ist es nicht erforderlich, dass zum Auffädeln von Wälzlagern lösbare Ausgleichsmassen angeordnet werden müssen. Daher können diese Ausgleichsmassen bei der Fertigung der Kurbelwelle mit dieser einstückig ausgebildet werden, was den anschließenden Montageaufwand reduziert.

Gemäß einer weiteren, den Montageaufwand reduzierenden Maßnahme können die Wälzlager bereits im zugeordneten Pleuel vormontiert werden. Zur Aufnahme des kurbelwellenseitigen Wälzlagers kann das Pleuel eine mittels Schrauben verbundene Halbschalenanordnung aufweisen. Alternativ hierzu kann das kurbelwellenseitige Wälzlager auch in eine korrespondierende Ausnehmung im Pleuel eingeschrumpft oder auf andere geeignete Weise gehalten werden.

Vorzugsweise ist die Verdichtereinheit nach Art eines mehrstufigen Kolbenverdichters mit einer Niederdruckstufe und mindestens einer weiteren darauffolgenden Hochdruckstufe ausgebildet. Besonders vorteilhaft für den Einsatz im Schienenfahrzeugbau ist eine Verdichtereinheit, die nach Art einer liegenden 3-ZylinderAnordnung mit zwei Zylindern für die Niederdruckstufe und einem Zylinder für die Hochdruckstufe ausgebildet ist. Hierbei kann der dynamische Massenausgleich durch zwei ungleiche, unlösbare Ausgleichsmassen zwischen den Kröpfungen der Kurbelwelle sowie zwei gleiche, lösbare Ausgleichsmassen zum benachbarten Kurbelwellenende hin realisiert werden.

Weitere die Erfindung verbessernde Maßnahmen werden gemeinsam mit der Beschreibung eines bevorzugten Ausführungsbeispiels der Erfindung anhand der Figuren näher dargestellt. Es zeigt:
- Fig.1: eine Draufsicht in teilweiser Schnittdarstellung eines Kolbenkompressors mit 3-Zylindern in liegender V-Bauweise, die eine Niederdruckstufe mit einer darauffolgenden Hochdruckstufe bilden und
- Fig. 2: eine detaillierte Schnittdarstellung im Bereich der Kurbelwelle der Verdichtereinheit.

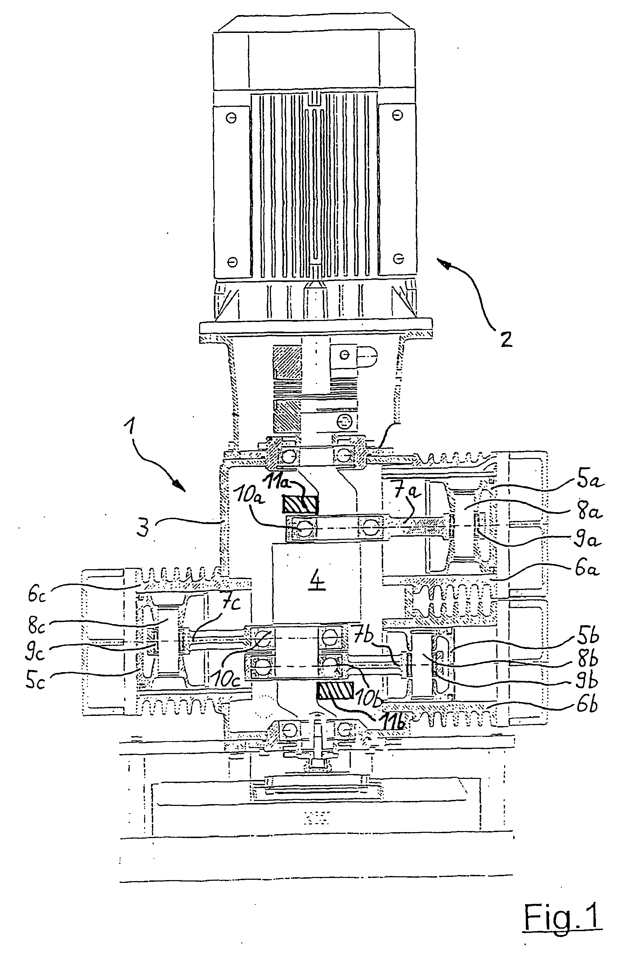

Gemäß Figur 1 besteht ein trockenlaufender Kolbenkompressor für Schienenfahrzeuge im wesentlichen aus einer zweistufigen Verdichtereinheit 1 mit angeflanschter Antriebseinheit 2. Die Antriebseinheit 2 ist als Elektromotor ausgeführt und ist am Gehäuse 3 der Verdichtereinheit 1 über eine Schraubverbindung lösbar befestigt. Die Antriebseinheit 2 versetzt eine im Gehäuse 3 endseitig wälzgelagerte ungeteilte Kurbelwelle 4 in eine Drehbewegung, welche in eine Hub- und Senkbewegung für drei Kolben 5a bis 5c umgesetzt wird, die innerhalb der am Gehäuse 3 befestigten topfartigen Zylinder 6a bis 6c zur Drucklufterzeugung untergebracht sind. Durch die Kolbenbewegung wird aus der Atmosphäre Luft über eine eingangsseitige, hier nicht dargestellte Filteranordnung angesaugt und verdichtet. Die Druckluft steht danach dem Druckluftsystem eines Schienenfahrzeuges - insbesondere für den Betrieb der Bremsanlage - zur Verfügung.

In diesem Ausführungsbeispiel ist die Verdichtereinheit 1 als mehrstufiger Kolbenverdichter mit Niederdruck- und Hochdruckstufe ausgeführt. Der Niederdruckstufe sind die beiden Zylinder 6a und 6c zugeordnet; zur Hochdruckstufe gehört der Zylinder 6b. Die drei Zylinder 6a bis 6c sind am Gehäuse 3 der Verdichtereinheit 1 gegenüberliegend in der sogenannten 180° V-Bauweise angeordnet. Der lineare Antrieb des Kolbens 5a bis 5c erfolgt über eine Kurbeltriebanordnung mittels zugeordneter Pleuel 7a bis 7c, die je auf der dem Kolben 5a bis 5c gegenüberliegenden Seite mit der Kurbelwelle 4 verbunden sind. Die kolbenseitige Befestigung der Pleuel 7a bis 7c erfolgt über je einen Kolbenbolzen 8a bis 8c, der die Verbindung mit dem zugeordneten Kolben 5a bis 5c herstellt. Auf dem Kolbenbolzen 8a bis 8c ist das obere Ende des Pleuels 7a bis 7c je über ein lebensdauergeschmiertes Nadellager 9a bis 9c gelagert. Die kurbelwellenseitige Lagerung jedes Pleuels 7a bis 7c ist durch Wälzlager 10a bis 10c realisiert.

Der dynamische Massenausgleich für die durch die Kurbelwelle 4 angetriebenen drei Pleuel 7a bis 7c erfolgt über Ausgleichsmassen, die an der Kurbelwelle 4 angeordnet sind. Um gleichzeitig eine Montage der Wälzlager 10a bis 10c vom Kurbelwellenende her auf den zugeordneten Sitz der Kurbelwelle 4 ohne einen störenden Einfluss der Ausgleichsmassen zu realisieren, sind die zwischen den Sitzen der Wälzlager 10a bis 10c auf der Kurbelwelle 4 und dem benachbarten Kurbelwellenende vorgesehenen Ausgleichsmassen 11a und 11b lösbar mit der Kurbelwelle 4 verbunden. Die geometrische Ausbildung der Kurbelwelle 4 zwischen den Sitzen für die Wälzlager 10a bis 10c und dem jeweils benachbarten Kurbelwellenende ermöglicht ein einfaches Auffädeln der ungeteilten Wälzlager 10a bis 10c über deren Innenring.

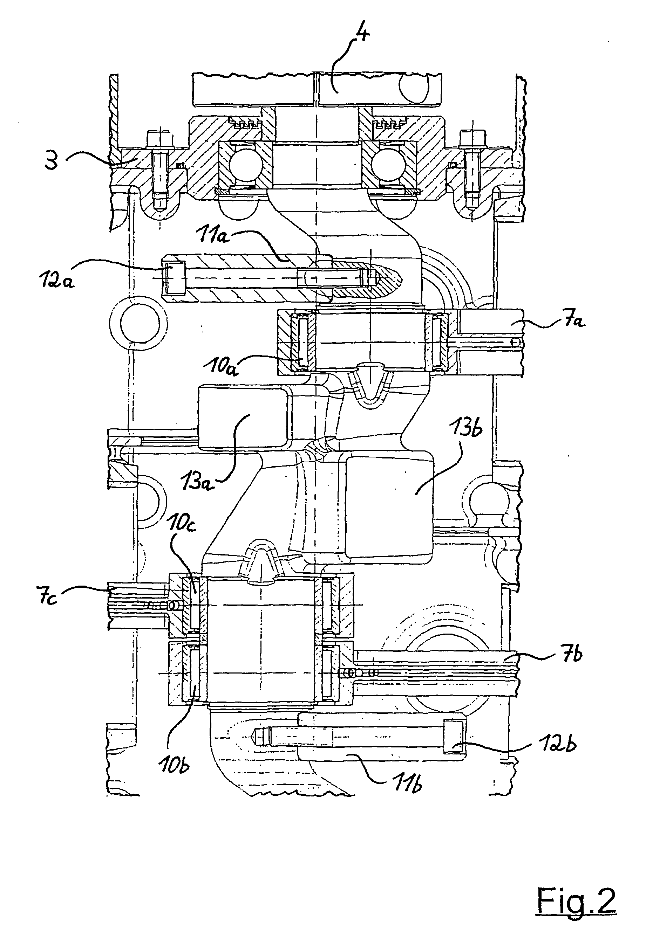

Gemäß dem Detailausschnitt nach Figur 2 erfolgt die lösbare Verbindung der Ausgleichsmassen 11a und 11b an der Kurbelwelle 4 mittels Schrauben 12a und 12b, die in eine korrespondierende Gewindebohrung in der Kurbelwelle 4 eingeschraubt sind. Zusätzlich zu den beiden lösbaren Ausgleichsmassen 11a und 11b sind im Mittelbereich der Kurbelwelle 4 zwischen den beiden Kröpfungen für die Pleuel 7a bis 7c zwei weitere Ausgleichsmassen 13a und 13b vorgesehen, die jedoch unlösbar mit der Kurbelwelle 4 verbunden sind. Im vorliegenden Ausführungsbeispiel sind die unlösbaren Ausgleichsmassen 13a und 13b an die Kurbelwelle 4 angeschmiedet. Insgesamt bilden die Ausgleichsmassen 11a und 13a sowie 11b und 13b zu den Enden der je zugeordneten Kröpfung eine Gegenmasse zu dem zugeordneten Pleuel 7a bzw. 7b, 7c.

Die erfindungsgemäße dynamisch massenausgeglichene Kurbelwelle 4 gestattet somit auf einfache Weise eine Montage der kurbelwellenseitigen Wälzlager. Die Erfindung ist nicht beschränkt auf das vorstehend beschriebene bevorzugte Ausführungsbeispiel. Es sind auch Abwandlungen hiervon denkbar, die auch bei anders ausgeführter konstruktiver Gestaltung vom beanspruchten Schutzbereich Gebrauch machen. So ist die Erfindung nicht darauf beschränkt, dass die lösbaren Ausgleichsmassen mittels Schrauben an der Kurbelwelle befestigt sind. Es ist auch denkbar, dass diese auf eine andere Weise - beispielsweise durch Aufklemmen - mit der Kurbelwelle eine lösbare Verbindung bilden. Die vorliegende Erfindung ist insbesondere bei trockenlaufenden Kolbenkompressoren einsetzbar; eine Anwendung bei ölgeschmierten Kolbenkompressoren ist jedoch ebenfalls möglich.

### Bezugszeichenliste

- **1**: Verdichtereinheit
- **2**: Antriebseinheit
- **3**: Gehäuse
- **4**: Kurbelwelle
- **5**: Kolben
- **6**: Zylinder
- **7**: Pleuel
- **8**: Kolbenbolzen
- **9**: Nadellager
- **10**: Wälzlager
- **11**: Ausgleichsmasse, lösbar
- **12**: Schraube
- **13**: Ausgleichsmasse, lösbar

## Patentansprüche

1. Kolbenkompressor mit dynamisch massenausgeglichener ungeteilter Kurbelwelle, insbesondere für Schienenfahrzeuge, der im Wesentlichen aus einer eine Drehbewegung erzeugenden Antriebseinheit (2) und einer nachgeschalteten Verdichtereinheit (1) besteht, welche im Wesentlichen aus mehreren an einem Gehäuse (3) für die Kurbelwelle (4) angeordneten topfartigen Zylindern (6a bis 6c) mit zugeordneten Kolben (5a bis 5c) besteht, wobei die über die Antriebseinheit (2) angetriebene Kurbelwelle (4) ihre Drehbewegung über je ein zumindest kurbelwellenseitig wälzgelagertes Pleuel (7a bis 7c) in eine lineare Bewegung für den zugeordneten Kolben (5a bis 5c) zum Komprimieren von Luft umwandelt, **dadurch gekennzeichnet, dass** jedes zwischen dem Pleuel (7a bis 7c) und der Kurbelwelle (4) angeordnete Wälzlager (10a bis 10c) ungeteilte Lagerschalen aufweist, wobei die zwischen den Sitzen für die Wälzlager (10a bis 10c) auf der Kurbelwelle (4) und dem benachbarten Kurbelwellenende vorgesehenen Ausgleichsmassen (11a, 11b) lösbar mit der Kurbelwelle (4) verbunden sind, um ein Auffädeln der Wälzlager (10a bis 10c) vom Kurbelwellenende her auf den zugeordneten Sitz der Kurbelwelle (4) zu ermöglichen, wobei zwischen den für die Pleuel (7a bis 7c) vorgesehenen Kröpfungen der Kurbelwelle (4) mindestens eine unlösbar mit der Kurbelwelle (4) verbundene Ausgleichsmasse (13a, 13b) vorgesehen ist, die an die Kurbelwelle (4) angeformt oder angeschweißt ist.

2. Kolbenkompressor nach Anspruch 1,
**dadurch gekennzeichnet, dass** die lösbare Verbindung der Ausgleichsmassen (11a, 11b) an der Kurbelwelle (4) durch Aufklemmen erfolgt.

3. Kolbenkompressor nach Anspruch 1,
**dadurch gekennzeichnet, dass** die lösbare Verbindung der Ausgleichsmasse (10a, 10b) durch Einschrauben der mit einem Gewindeabschnitt versehenen Ausgleichsmassen (11a, 11b) oder mittels separater Schrauben (12a, 12b) hergestellt ist.

4. Kolbenkompressor nach Anspruch 1,
**dadurch gekennzeichnet, dass** die lösbaren mit der Kurbelwelle (4) verbundenen Ausgleichsmassen (11a, 11b) die gleiche geometrische Gestalt aufweisen.

5. Kolbenkompressor nach einem der vorstehenden Ansprüche,
**dadurch gekennzeichnet, dass** das ungeteilte Wälzlager (10a bis 10c) am zugeordneten Pleuel (7a bis 7c) vormontiert ist.

6. Kolbenkompressor nach einem der vorstehenden Ansprüche,
**dadurch gekennzeichnet, dass** das Pleuel (8a bis 7c) kurbelwellenseitig über eine mittels Schrauben verbundene Halbschalenanordnung zur Aufnahme des auf der Kurbelwelle (4) angeordneten Wälzlagers (10a bis 10c) aufweist.

7. Kolbenkompressor nach einem der vorstehenden Ansprüche,
**dadurch gekennzeichnet, dass** im Bereich des kolbenseitigen Endes des Pleuels (7a bis 7c) ein lebensdauergeschmiertes Nadellager (9a bis 9c) eingesetzt ist, welches eine Wälzlagerstelle zum zugeordneten Kolbenbolzen (8a bis 8c) bildet.

8. Kolbenkompressor nach einem der vorstehenden Ansprüche
**dadurch gekennzeichnet, dass** die Verdichtereinheit (1) nach Art eines mehrstufigen Kolbenverdichters mit einer Niederdruckstufe und mindestens einer weiteren darauffolgenden Hochdruckstufe ausgebildet ist.

9. Kolbenkompressor nach Anspruch 6,
**dadurch gekennzeichnet, dass** die Verdichtereinheit (1) nach Art einer liegenden 3-ZylinderAnordnung mit zwei Zylindern (6a, 6c) für die Niederdruckstufe und einem Zylinder (6b) für die Hochdruckstufe ausgebildet ist.

10. Kolbenkompressor nach Anspruch 7,
**dadurch gekennzeichnet, dass** der dynamische Massenausgleich durch zwei ungleiche, unlösbare Ausgleichsmassen (13a, 13b) zwischen den Kröpfungen der Kurbelwelle (4) sowie zwei gleiche, lösbare Ausgleichsmassen (11a, 11b) zum benachbarten Kurbelwellenende hin realisiert sind.

11. Kolbenkompressor nach einem der vorstehenden Ansprüche,
**dadurch gekennzeichnet, dass** die Verdichtereinheit (1) nach Art eines trockenlaufenden Kolbenverdichters oder nach Art eines ölgeschmierten Kolbenverdichters ausgeführt ist.

## Claims

1. Piston compressor with a dynamically mass-compensated, undivided crankshaft, in particular for rail vehicles, which consists essentially of a drive unit (2) that produces a rotation movement and a downstream compressor unit (1), the latter consisting essentially of a plurality of pot-like cylinders (6a to 6c) with associated pistons (5a to 5c) arranged on a housing (3) for the crankshaft (4), such that the crankshaft (4) driven by the drive unit (2) converts its rotary movement via respective piston rods (7a to 7c) each provided with a roller bearing at least on the crankshaft side, into a linear movement of the associated piston (5a to 5c) in order to compress air, **characterized in that** each roller bearing (10a to 10c) arranged between the piston rod (7a to 7c) and the crankshaft (4) comprises undivided bearing shells, such that the compensatory masses (11a, 11b) provided on the crankshaft (4) between the seatings for the roller bearings (10a to 10c) and at the adjacent crankshaft end are connected detachably to the crankshaft (4), in order to enable the roller bearings (10a to 10c) to be fitted from the crankshaft end onto the associated seating of the crankshaft, and between the crank bends of the crankshaft (4) provided for the piston rods (7a to 7c) at least one compensatory mass (13a, 13b) undetachably connected to the crankshaft (4) is provided, which is formed on or welded to the crankshaft (4).

2. Piston compressor according to Claim 1, **characterized in that** the compensatory masses (11a, 11b) are connected detachably to the crankshaft (4) by clamping.

3. Piston compressor according to Claim 1,
**characterized in that** the compensatory masses (11a, 11b) are connected detachably by screwing into a threaded section provided in the compensatory masses (11a, 11b) or by the use of separate screw-bolts (12a, 12b).

4. Piston compressor according to Claim 1,
**characterized in that** the compensatory masses (11a, 11b) connected detachably to the crankshaft (4) have the same geometrical design.

5. Piston compressor according to any of the preceding claims,
**characterized in that** the undivided roller bearing (10a to 10c) is pre-fitted onto the associated piston rod (7a to 7c).

6. Piston compressor according to any of the preceding claims,
**characterized in that** on the crankshaft side the piston rod (7a to 7c) comprises a half-shell arrangement connected by means of screw-bolts, for holding the roller bearing (10a to 10c) arranged on the crankshaft (4).

7. Piston compressor according to any of the preceding claims,
**characterized in that** in the area of the piston-side end of the piston rod (7a to 7c) is set a permanently lubricated needle bearing (9a to 9c), which forms a roller bearing point for the associated gudgeon pin (8a to 8c).

8. Piston compressor according to any of the preceding claims,
**characterized in that** the compressor unit (1) is in the form of a multi-stage piston compressor with a low-pressure stage and at least one other, downstream high-pressure stage.

9. Piston compressor according to Claim 6,
**characterized in that** the compressor unit (1) is in the form of a horizontal 3-cylinder arrangement with two cylinders (6a, 6c) for the low-pressure stage and one cylinder (6b) for the high-pressure stage.

10. Piston compressor according to Claim 7,
**characterized in that** the dynamic mass compensation is effected by two unequal, undetachable compensatory masses (13a, 13b) between the crank bends of the crankshaft (4) and two equal, detachable compensatory masses (11a, 11b) at the adjacent crankshaft ends.

11. Piston compressor according to any of the preceding claims,
**characterized in that** the compressor unit (1) is in the form of a dry-running piston compressor or an oil-lubricated piston compressor.

## Revendications

1. Compresseur à piston comprenant un vilebrequin en une pièce à compensation dynamique de la masse, notamment pour des véhicules sur rails, qui est constitué essentiellement d'un groupe (2) d'entraînement produisant un mouvement de rotation et d'un groupe (1) compresseur en aval, qui est constitué essentiellement de plusieurs cylindres (6a à 6c) de type en pot montés sur un carter (3) pour le vilebrequin (4) et ayant des pistons (5a à 5c) associés, dans lequel le vilebrequin (4) entraîné par le groupe (2) d'entraînement transforme, pour comprimer de l'air, son mouvement de rotation en un mouvement linéaire du piston (5a à 5c) associé par l'intermédiaire de respectivement une bielle (7a à 7c) montée sur rouleau au moins du côté du vilebrequin, **caractérisé en ce que** chaque palier (10a à 10c) à rouleau monté entre la bielle (7a à 7c) et le vilebrequin (4) a des coussinets de palier en une pièce, les masselottes (11a, 11b) de compensation prévues entre les sièges des paliers (10a à 10c) à rouleau sur le vilebrequin (4) et l'extrémité voisine du vilebrequin étant reliées de manière amovible au vilebrequin (4) pour rendre possible d'enfiler les paliers (10a à 10c) à rouleau depuis l'extrémité du vilebrequin sur le siège associé du vilebrequin (4), dans lequel, entre les coudes du vilebrequin (4) prévus pour les bielles (7a à 7c), est prévue, au moins, une masselotte (13a, 13b) de compensation, qui est reliée indissolublement au vilebrequin (4) et qui est formée ou soudée sur le vilebrequin (4) .

2. Compresseur à piston suivant la revendication 1, **caractérisé en ce que** la liaison amovible des masselottes (11a, 11b) de compensation au vilebrequin (4) s'effectue par serrage.

3. Compresseur à piston suivant la revendication 1, **caractérisé en ce que** la liaison amovible des masselottes (10a, 10b) de compensation s'effectue par vissage des masselottes (11a, 11b) de compensation pourvues d'un segment fileté ou au moyen de vis (12a, 12b) distinctes.

4. Compresseur à piston suivant la revendication 1, **caractérisé en ce que** les masselottes (11a, 11b) de compensation reliées de manière amovible au vilebrequin (4) ont la même forme géométrique.

5. Compresseur à piston suivant l'une des revendications précédentes,
**caractérisé en ce que** le palier (10a à 10c) à rouleau en une seule pièce est monté à l'avance sur la bielle (7a à 7c) associée.

6. Compresseur à piston suivant l'une des revendications précédentes,
**caractérisé en ce que** la bielle (8a à 7c) comporte, pour le logement du palier (10a à 10c) à rouleau monté sur le vilebrequin (4), un dispositif en hémicoquille assemblé au moyen de vis du côté du vilebrequin.

7. Compresseur à piston suivant l'une des revendications précédentes,
**caractérisé en ce que**, dans la zone de l'extrémité, du côté du piston, de la bielle (7a à 7c), est inséré un palier (9a à 9c) à aiguille à lubrification de longue durée de vie, qui forme un point de palier à rouleau par rapport à l'axe (8a à 8c) de piston associé.

8. Compresseur à piston suivant l'une des revendications précédentes,
**caractérisé en ce que** le groupe (1) compresseur est constitué à la manière d'un compresseur à piston à plusieurs étages ayant un étage basse pression et au moins un autre étage haute pression venant ensuite.

9. Compresseur à piston suivant la revendication 6, **caractérisé en ce que** le groupe (1) compresseur est constitué à la manière d'un dispositif horizontal à trois cylindres ayant deux cylindres (6a, 6c) pour l'étage basse pression et un cylindre (6b) pour l'étage haute pression.

10. Compresseur à piston suivant la revendication 7, **caractérisé en ce que** la compensation dynamique de la masse est réalisée par deux masselottes (13a, 13b) de compensation inégales et inamovibles entre les coudes du vilebrequin (4), ainsi que par deux masselottes (11a, 11b) de compensation égales et amovibles vers l'extrémité voisine du vilebrequin.

11. Compresseur à piston suivant l'une des revendications précédentes,
**caractérisé en ce que** le groupe (1) compresseur est réalisé à la manière d'un compresseur à piston sec ou à la manière d'un compresseur à piston lubrifié à l'huile.
